Europäisches Patentamt

European Patent Office

Office européen des brevets

(11) Veröffentlichungsnummer: **0 508 356 A2**

## (12) EUROPÄISCHE PATENTANMELDUNG

(21) Anmeldenummer: **92105942.4**

(51) Int. Cl.5: **G06F 9/30, G06F 9/38**

(22) Anmeldetag: **06.04.92**

(30) Priorität: **09.04.91 EP 91105607**

(43) Veröffentlichungstag der Anmeldung:
**14.10.92 Patentblatt 92/42**

(84) Benannte Vertragsstaaten:
**AT BE CH DE ES FR GB IT LI NL SE**

(71) Anmelder: **Siemens Nixdorf**
**Informationssysteme Aktiengesellschaft**
**Fürstenallee 7**

**W-4790 Paderborn(DE)**

(72) Erfinder: **Schubert, Ludwig, Dr.-Ing.**
**Irmgardstrasse 21/2**
**W-8000 München 71(DE)**

(74) Vertreter: **Fuchs, Franz-Josef, Dr.-Ing. et al**
**Postfach 22 13 17**
**W-8000 München 22(DE)**

(54) **Datenverarbeitungsanlage mit Verarbeitung von Aufbereitungsbefehlen.**

(57) Ausführung von Aufbereitungsbefehlen (ED und EDMK) durch eine mit der vorhandenen Befehlsverarbeitungssteuerung (PLU/EXU) gekoppelte gesonderte Aufbereitungseinrichtung (EDW), wobei die Arbeit der Befehlsverarbeitungssteuerung auf wenige Steuerungsfunktionen beschränkt ist. Eine aus Registern als Pufferspeicher bestehende Ladestufe für die Aufbereitungsmaske und für das Sendefeld oder für Teile derselben ermöglicht ein Vorausladen, wobei ein Vorausladen des Sendefeldes oder von Teilen desselben und/oder Nachladen nur erfolgt, wenn damit keine Seitengrenzenüberschreitung zu einer nicht verfügbaren Seite verbunden ist. Gesonderte Ausgestaltungen hinsichtlich der Ladestufe, der Ladestrategie und der damit verbundenen Steuerung sowie der übrigen Aufbereitungseinrichtung in getakteter Pipelinestruktur für serielle Verarbeitung der einzelnen Maskenbytes.

FIG 2

Die Erfindung betrifft eine Datenverarbeitungsanlage, die neben anderen zu verarbeitenden Befehlen Befehle zur Aufbereitung von Datenfeldern in eine druckgerechte Form auszuführen hat, indem eine gepackte Dezimalzahl variabler Länge eines als Operand zur Verfügung gestellten Sendefeldes entpackt und anhand der Zeichen einer als weiterer Operand verfügbaren Aufbereitungsmaske vorgegebener Länge aufbereitet wird.

Entsprechende Aufbereitungsbefehle sind z.B. die Befehle ED (Aufbereiten) und EDMK (Aufbereiten und Markieren) entsprechend der Siemens-Druckschrift D 15/5104-04: Zentraleinheiten Siemens- System 7.500 und 7.700 - Beschreibung und Befehlsliste, Seiten 10-140 bis 10-146.

Diese Befehle ermöglichen z.B. das Einfügen von Punkt, Komma oder anderen Zeichen, das Unterdrücken führender Nul len, eine Schutzsternschreibung oder Vorzeichenauswertung. Außerdem können Felder des Wertes "O" programmiert gelöscht, mehrere Felder mit einem einzigen Befehl aufbereitet oder alphanumerischer Text mit Zahlen kombiniert werden usw.. Der Funktionsumfang dieser Befehle ist daher sehr komplex und die üblicherweise mikroprogrammgesteuerte Ausführung durch die vorhandene Befehlsausführungseinheit sehr zeitraubend. Eine weitere Schwierigkeit resultiert daraus, daß abweichend von den übrigen Befehlen die Länge des einen Operanden, nämlich des Sendefeldes, nicht im voraus bekannt ist und daher nicht voraussehbar ist, ob der Operand gegebenenfalls die Seitengrenze zu einer nicht verfügbaren Seite überschreitet oder nicht. Ein byteweises Bereitstellen kann gerade bei Befehlsverarbeitungssteuerungen mit Pipelinestrukturen dazu führen, daß die Verarbeitung nicht rechtzeitig zum Nachladen gebremst werden kann und demzufolge falsche Daten als Sendefeldbytes in die Verarbeitungspipeline eingeschleust werden, die zu falschen Aufbereitungsergebnissen führen. Andererseits kann ein vorauseilendes Bereitstellen dieses Operanden sehr leicht zum Abbruch führende Systemfehler auslösen. Hinzu kommt, daß die Maskenbytes durch die Ergebnisbytes ersetzt werden und erstere nach ihrer Verarbeitung normalerweise nicht mehr zur Verfügung stehen.

Diese Probleme lassen sich auch dadurch nicht ohne weiteres lösen, daß man die Ausführung solcher Aufbereitungsbefehle gesonderten Aufbereitungswerken überträgt, wie es beispielsweise bei der Lösung nach der japanischen Offenlegungsschrift 59-55544 oder der europäischen Patentanmeldung 136656 der Fall ist.

Aufgabe der Erfindung ist es daher, eine Datenverarbeitungsanlage zu schaffen, die trotz der besonderen Anforderungen bei der Ausführung der Aufbereitungsfehle effektiv und zuverlässig arbeitet.

Gemäß den kennzeichnenden Merkmalen des Patentanspruches 1 verwendet die Datenverarbeitungsanlage ebenfalls eine mit der üblichen Befehlsverarbeitungssteuerung gekoppelte gesonderte Aufbereitungseinrichtung für die Ausführung der Aufbereitungsbefehle, wobei die Arbeit der Befehlsausführungssteuerung auf nur wenige Steuerungsfunktionen beschränkt ist.

Anstelle einer byteweisen Bereitstellung der einzelnen Sendefeldbytes werden dem Aufbereitungswerk immer mehrere Sendefeldbytes von der Befehlsausführungssteuerung übergeben, um die Anzahl der Unterbrechungen während der Aufbereitung zu verringern. Dabei kann je nach Ausgestaltung der Pufferspeicherkapazität der Ladestufe der Umfang zwischen der der Breite des Datenleitungssystems entsprechenden Anzahl von Sendefeldbytes als zweckmäßig kleinster Wert und einer dem längstmöglichen Sendefeld entsprechenden Anzahl von maximal 256 Sendefeldbytes schwanken, wobei bei Bereitstellung des gesamten Sendefeldes eine Übertragung der Portionen oder Zeilen entsprechend der Breite des Datenleitungssystems nacheinander erfolgt. Voraussetzung für diese Art der Bereitstellung ist aber immer, daß dazu nicht die Grenze zu einer im Arbeitsspeicher nicht verfügbaren Seite überschritten werden muß. Auf diese Weise wird sichergestellt, daß durch einen Zugriff auf eine gesperrte Seite oder durch einen Adreßübersetzungsfehler bei einer nachzuladenden Seite nicht unnötig ein vorzeitiger Abbruch herbeigeführt wird, obwohl der bis zur Seitengrenzenüberschreitung als Sendefeld zur Verfügung stehende Datenteil für die Bearbeitung der Aufbereitungsmaske ausgereicht hätte.

Die von einer Seitengrenzenüberschreitung ausgehende Gefahr eines unnötigen Abbruches ist zwangsläufig geringer, wenn das jeweilige Laden oder Nachladen der Ladestufe auf eine vorgegebene Anzahl von Bytes beschränkt bleibt. Andererseits wird bei kleineren Portionen von Sendefeldbytes die Anzahl der Nachladeunterbrechungen erhöht und damit auch die Aufbereitungsdauer verlängert.

Für die Bereitstellung der Operanden von Aufbereitungsmaske und Sendefeld bestehen zudem zwei Möglichkeiten, nämlich die der linksbündig ausgerichteten Bereitstellung und gemäß Anspruch 2 die der nicht ausgerichteten Bereitstellung. Letzteres hat den Vorteil, daß in Bezug auf die Organisation des Arbeitsspeicher eine bereitzustellende Datenportion immer auf die Seitengrenze ausgerichtet ist und daher nicht von einer Seitengrenzenüberschreitung erfaßt wird. Auch können alle Datenbytes ohne weiteres bis zur Seitengrenze für die Aufbereitung genutzt werden, jedoch ist eine zusätzliche Adressensteuerung für die Kennzeichnung der ersten gültigen Bytes von Aufbereitungsmaske und Sendefeld erforderlich.

Weiterbildungen bezüglich des Aufbaus und der Arbeitsweise der Aufbereitungseinrichtung, bezüglich

2

der Ladestrategie für die Pufferspeicher und deren Ausbildung als Einzel- oder Wechselpuffer zur Bereitstellung der Aufbereitungsmaske und des Sendefeldes sowie bezüglich einzelner Steuerungsmaßnahmen ergeben sich aus den Unteransprüchen.

Einzelheiten der Erfindung seinen nachfolgend anhand eines in der Zeichnung dargestellten Ausführungsbeispieles näher erläutert. Im einzelnen zeigen

| | |
|---|---|
| FIG 1 | den Aufbau der Aufbereitungsbefehle ED und EDMK, |
| FIG 2 | ein allgemeines Blockschaltbild mit Aufbereitungswerk zur Verarbeitung der Aufbereitungsbefehle von FIG 1, |
| FIG 3 | ein allgemeines Blockschaltbild des Aufbereitungswerkes von FIG 2, |
| FIG 4 A bis FIG 4 C | Ablaufdiagramme für die Mikroprogrammsteuerung von FIG 2 zur Steuerung des Aufbereitungswerks, |
| FIG 5 | ein Strukturbild des Aufbereitungswerkes von FIG 2, |
| FIG 6 | die Pufferladesteuerung des Aufbereitungswerkes, |
| FIG 7 A, FIG 7 B | die Steuerung des Aufbereitungswerkes in Ergänzung zu FIG 5 und |
| FIG 8 A, FIG 8 B | die Verknüpfungslogik des Aufbereitungswerkes. |

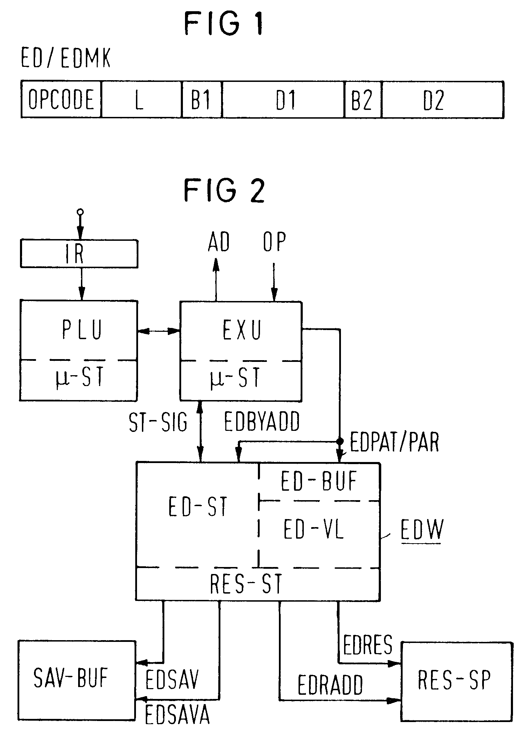

Bei den in FIG 1 gezeigten Aufbereitungsbefehlen ED und EDMK wird abhängig vom Operationscode OPCODE eine durch die Basisadresse im Register B2 in Verbindung mit der Distanzadresse D2 bestimmte gepackte Dezimalzahl variabler Länge als Sendefeld entpackt und mit dem Zeichen einer durch die Basisadresse im Register B1 in Verbindung mit der Distanzadresse D1 bestimmten Aufbereitungsmaske vorgegebener Länge L aufbereitet. Das Ergebnis wird dann an dem durch die Adresse der Aufbereitungsmaske bestimmten Speicherplatz abgespeichert. Zusätzlich wird beim Befehl EDMK für "Aufbereiten und Markieren" die Adresse der ersten von 0 verschiedenen Ziffer des Ergebnisses in einem vorgegebenen Mehrzweckregister gespeichert, wenn die zugehörige Steuerbedingung erfüllt ist. Eine ausführliche Beschreibung dieser Befehle und deren Funktion findet sich z.B. in der Siemens-Druckschrift D 15/5104-04: Zentraleinheiten Siemens- System 7.500 und 7.700 - Beschreibung und Befehlsliste, Seiten 10-140 bis 10-146.

Das Blockschaltbild von FIG 2 zeigt ein Befehlsregister IR, in dem die zu verarbeitenden Befehle eines Programms der Reihe nach bereitgestellt werden. Eine Aufbereitungseinheit PLU mit Mikroprogrammsteuerung μ-ST übernimmt die einzelnen Befehle in der üblichen Weise aus dem Befehlsregister IR, veranlaßt gegebenenfalls die Bereitstellung der zugehörigen Operanden und leitet den Befehl dann zur Ausführung an eine Ausführungseinheit EXU mit Mikroprogrammsteuerung μ-ST weiter.

Gemäß der Erfindung werden die Aufbereitungsbefehle nicht in der herkömmlichen Weise durch die Ausführungseinheit EXU programmgesteuert ausgeführt, sondern die Ausführung der Aufbereitungsbefehle erfolgt in einem gesonderten Aufbereitungswerk EDW hardwaregesteuert unter Kontrolle der Mikroprogrammsteuerung μ-ST der Ausführungseinheit EXU.

Dieses Aufbereitungswerk besteht aus vier Funktionseinheiten, nämlich einer Pufferspeichereinheit ED-BUF zur Übernahme und Bereitstellung der jeweils benötigten Teile des Sendefeldes und der Aufbereitungsmaske, einer beide Teile verarbeitenden Verknüpfungslogik ED-VL mit nachgeschalteter Ergebnissteuerung RES-ST und einer gemeinsamen Steuerung ED-ST, die mit der übergeordneten Mikroprogrammsteuerung μ-ST zusammenarbeitet und die übrigen Funktionseinheiten mit den benötigten Steuersignalen versorgt.

Weiterhin dargestellt ist ein Speicherbereich RES-SP für die Aufnahme der Bytes einer Zeile des Aufbereitungsergebnisses EDRES abhängig von der dazugehörigen Byteadresse EDRAD sowie ein Speicherbereich SAV-BUF zur Sicherung der Bytes der Aufbereitungsmaske abhängig von den zugehörigen Adressen.

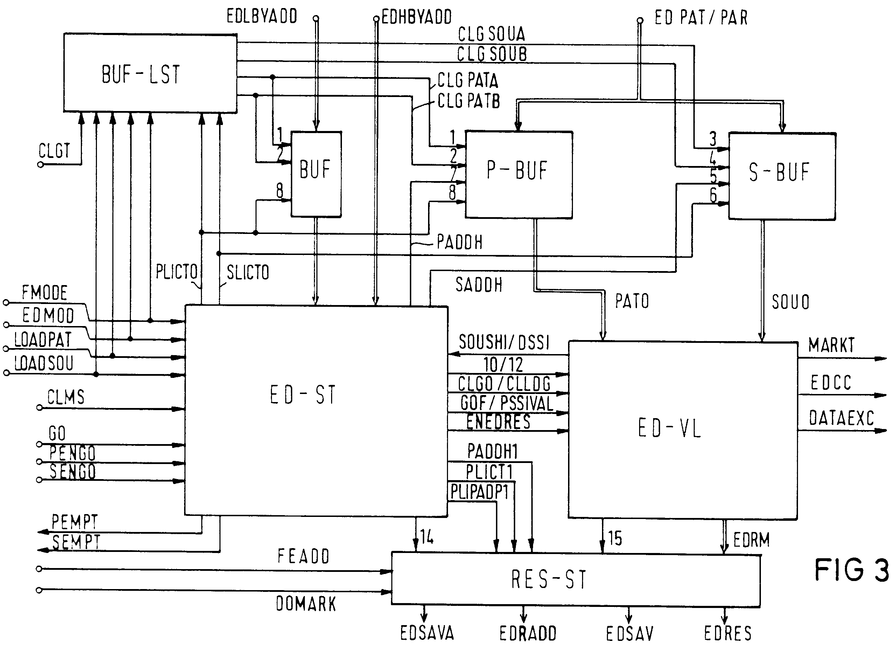

FIG 3 zeigt ein detaillierteres Blockschaltbild des Aufbereitungswerkes EDW mit den verwendeten Steuersignalen zwischen den einzelnen Funktionseinheiten und an der Schnittstelle zwischen der übergeordneten Mikroprogrammsteurung μ-ST und dem Aufbereitungswerk. Die Schnittstellensignale ST-SIG, die am linken und rechten Rand von FIG 3 angegeben sind, haben dabei folgende Bedeutung:

| | |
|---|---|
| FMODE, EDMOD: | Betriebssteuersignale |
| LOADSOU: | Ladesignale für eine Sendefeldzeile in den Pufferspeicher S-BUF und Übernahme der zugehörigen Startadresse EDHBYADD |
| LOADPAT: | Ladesignale für eine Maskenzeile in den Pufferspeicher P-BUF und zur Übernahme der zugehörigen Start- und Endadressen EDHBYADD und EDLBYADD |
| CLGT: | Ladetakt |
| GO: | Freigabesignal für die Aufbereitung |
| PENGO: | Freigabesignal für die Aufbereitung nach einer Nachladeanforderung PEMPT |
| SENGO: | Freigabesignal für die Aufbereitung nach einer Nachladeanforderung SEMPT |

3

CLMS:	Maschinentakt
PEMPT:	Nachladeanforderung, wenn der Pufferspeicher P-BUF für die Maske leer ist
SEMPT:	Nachladeanforderung, wenn der Pufferspeicher S-BUF für das Sendefeld leer ist
DOMARK:	löst bei Vorliegen des Signals MARKT das Markieren aus
FEADD:	Festadresse für den Markierfall
MARKT:	kennzeichnet den Markierfall
EDCC:	Bedingungscode
DATAEXC:	kennzeichnet einen Datenfehler

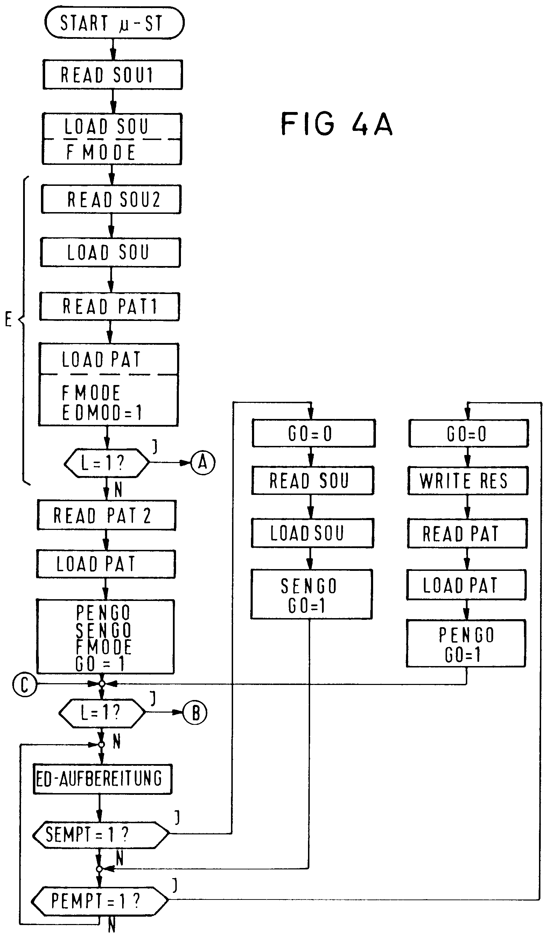

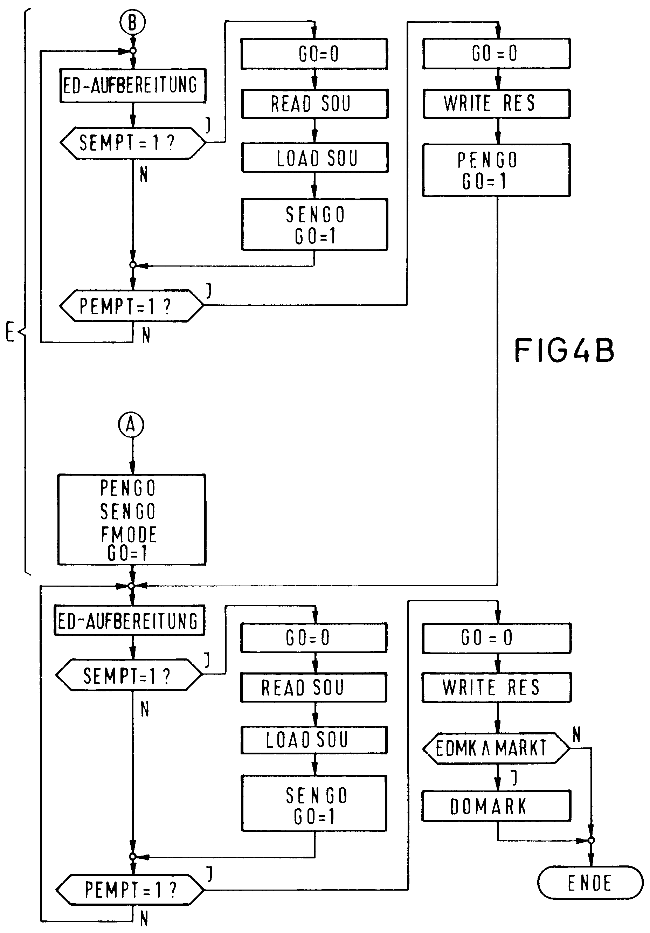

Aufgrund dieser Schnittstellensignale ergibt sich beispiels- weise der in FIG 4 A und FIG 4 B dargestellte und von der übergeordneten Mikroprogrammsteuerung μ-ST kontrollierte Steuerungsablauf, wobei unterstellt ist, daß beide Pufferspeicher S-BUF und P-BUF als Wechselpuffer ausgebildet sind und zu Beginn eines Aufbereitungslaufes jeweils zwei Zeilen nacheinander in die Wechselpuffer geladen werden können.

Mit dem Start der Ausführung eines Aufbereitungsbefehles ED oder EDMK durch die Mikroprogramm-steuerung μ-ST wird zunächst mit READ SOU1 die erste Sendefeldzeile SOU1, z.B. 16 Byte, aus dem Arbeitsspeicher gelesen und anschließend deren Übernahme mit LOADSOU und FMODE in den einen Wechselpuffer des Aufbereitungswerkes veranlaßt. Nachfolgend wird mit READ SOU2 die zweite Sendefeldzeile SOU2 gelesen und mit LOADSOU übergeben. Als weiteres wird mit READ PAT1 die erste Maskenzeile für die Übernahme gelesen und mit LOADPAT und FMODE übergeben. Gleichzeitig wird das Signal EDMOD = 1 gesetzt, das für den weiteren Ablauf gültig bleibt.

Bei jeder Bereitstellung einer Maskenzeile wird gleichzeitig überprüft, ob es die letzte Zeile der Aufbereitungsmaske ist, und wenn ja, eine Markierung L gesetzt. Ist die erste übergebene Maskenzeile bereits die letzte, erfolgt über (A) ein Aussprung aus dem linearen Programmlauf. Im anderen Falle wird mit READ PAT2 auch die zweite Maskenzeile gelesen und mit LOADPAT und FMODE die Übernahme veranlaßt.

Weiterhin werden mit SENGO, PENGO, FMODE und GO = 1 die Startbedingungen für das Aufbereitungswerk EDW gegeben, wobei abhängig von dem Test L = 1 das Programm linear fortgesetzt oder über den Aussprung (B) verzweigt wird.

Bei linearer Programmfortsetzung erfolgt mit jedem weiteren Maschinenzyklus abhängig von Takt CLMS die Abarbeitung eines Maskenbytes aus dem Pufferspeicher P-BUF und nachfolgend die Übernahme eines entsprechenden Ergebnisbytes EDRES in den Speicherbereich RES-SP von FIG 2, wo die Ergebnisbytes zeilenweise aufgesammelt werden. Gleichzeitig wird getestet, ob einer der Wechselpuffer P-BUF oder alle Wechselpuffer S-BUF leer sind und daher eine Nachladeanforderung PEMPT bzw. SEMPT vorliegt. Solange dies nicht der Fall ist, wird die Abarbeitung der Maskenbytes fortgesetzt.

Liegt eine Nachladeanforderung SEMPT für das Sendefeld SOU vor, wird mit GO = 0 das bereits angehaltene Aufbereitungswerk EDW im Stoppzustand gehalten und zunächst mit READ SOU die nächste Sendefeldzeile gelesen und wieder mit LOADSOU übergeben. Danach wird mit SENGO und GO = 1 die weitere Aufbereitung freigegeben.

In gleicher Weise reagiert die Mikroprogrammsteuerung μ-ST bei einer Nachladeanforderung PEMPT für die nächste Maskenzeile. Bevor aber im vorliegenden Fall die neue Maskenzeile gelesen werden kann, wird die im Speicherbereich RES-SP (FIG 2) aufgesammelte Ergebniszeile an den Platz der verarbeiteten Maskenzeile mit WRITE RES zurückgeschrieben. Erst dann wird die neue Maskenzeile mit READ PAT gelesen und mit LOADPAT übergeben, wobei mit PENGO und GO = 1 das Aufbereitungswerk wiederum für die weitere Aufbereitung freigegeben wird.

Wie bereits erwähnt, werden zu Beginn immer zwei Maskenzeilen in einen Wechselpuffer P-BUF geladen. Wird außerdem eine Nachladeanforderung PEMPT immer dann bereits gestellt, wenn einer der Wechselpuffer frei ist, dann sind beim Aussprung (B) der Ablauffolge von FIG 4 A infolge des Nachladens der letzten Maskenzeile und bei erfülltem Test L = 1 immer zwei gepufferte Maskenzeilen aufzubereiten. Der entsprechende Ablauf ist in FIG 4 B dargestellt. Die dargestellte Aufbereitungsschleife mit dem Test SEMPT = 1 und PEMPT = 1 entspricht dabei dem unteren Teil von FIG 4 A, ebenso der Nachladezweig für eine neue Sendefeldzeile SOU bei erfülltem Test SEMPT = 1. Ist dagegen der Test PEMPT1 erfüllt und damit eine der beiden letzten Maskenzeilen aufbereitet, wird zunächst bei gestoppter Aufbereitung die aufgesammelte Ergebniszeile mit WRITE RES zurückgeschrieben. Da nun nur noch die letzte Maskenzeile aufzubereiten ist, entfällt jedoch abweichend von dem Ablauf in FIG 4 A das Nachladen einer neuen Maskenzeile, so daß die Aufbereitung der letzten Maskenzeile unmittelbar mit PENGO und GO = 1 wieder freigegeben werden kann.

Dazu wird erneut eine Aufbereitungsschleife mit den Tests SEMPT = 1 und PEMPT = 1 durchlaufen und gegebenenfalls eine neue Sendefeldzeile SOU nachgeladen, wenn zwischenzeitlich der Test SEMPT = 1 erfüllt wird, bis schließlich der erfüllte Test PEMPT = 1 die vollendete Aufbereitung der letzten Maskenzeile anzeigt. Wiederum wird bei gestopptem Aufbereitungswerk das aufgesammelte Ergebnis mit WRITE RES zurückgeschrieben und bei nicht erfülltem Test EDMK∧MARKT das Ende der Ausführung des Befehls ED erreicht.

Handelt es sich dagegen bei dem ausgeführten Befehl um den Befehl EDMK und wird mit MARKT ein Markierungsfall angezeigt, also der Test erfüllt, dann wird mit DOMARK erst die Markierung ausgelöst, bevor das Aufbereitungsprogramm der Mikroprogrammsteuerung μ-ST endet.

Die im unteren Teil von FIG 4 B dargestellte Ablaufschleife wird auch unmittelbar beim Aussprung (A) aus der Ablauffolge von FIG 4 A erreicht, wenn die nach dem Start geladene erste Maskenzeile zugleich die letzte ist. Nur müssen dann vor Eintritt in die Aufbereitungsschleife die Startbedingungen für die Aufbereitung mit PENGO, SENGO, FMODE und GO = 1 wie nach dem Laden einer zweiten Maskenzeile bei FIG 4 A hergestellt werden.

Würde man statt der Wechselpuffer nur Einzelpuffer verwenden, vereinfachte sich das Ablaufdiagramm von FIG 4 A und FIG 4 B. Dann könnten nämlich die mit E bezeichneten Teile einfach entfallen, und mit dem Aussprung (B) würde dann unmittelbar auf die untere Ablaufschleife von FIG 4 B übergegangen. Allerdings müßte dann das entfallene Betriebssteuersignal EDMOD = 1 zum Start der Aufbereitung nach Laden der ersten Maskenzeile eingeschaltet werden.

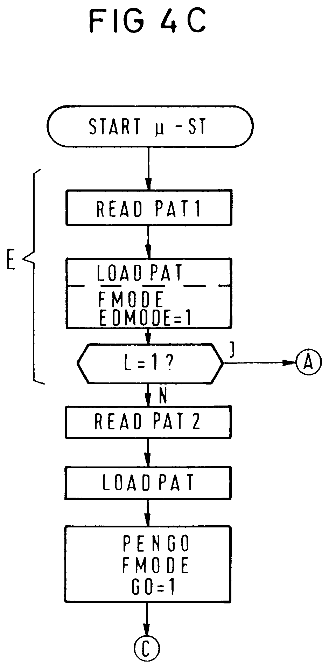

Eine weitere Ablaufvariante zeigt FIG 4 C. Hier wird auf das vorzeitige Lesen einer Sendefeldzeile SOU nach dem Start verzichtet und zunächst nur eine oder zwei Maskenzeilen gelesen, wie bereits beschrieben. Danach wird über die Verbindung (C) unmittelbar in die untere Ablaufschleife von FIG 4 A übergelei- tet und eine Sendefeldzeile erst dann gelesen, wenn es erforderlich ist. Eine solche Ablaufvariante würde das unberechtigte Lesen eines Sendefeldes grundsätzlich ausschließen. Auch hierbei gilt bei Verwendung eines Einzelpuffers, daß der mit E bezeichnete Teil entfallen kann und daß das dadurch entfallene Betriebssteuersignal EDMOD = 1 nach Laden der ersten Maskenzeile nachgeholt wird.

Abhängig von der Art der verwendeten Pufferspeicher für die Bereitstellung des Sendefeldes und von der der Ablaufsteuerung zugrundegelegten Ladestrategie läßt sich die Gefahr, daß Sendefeldteile unberechtigt, weil sie von der Aufbereitung nicht benötigt werden, vorausgelesen werden, gegenüber den bekannten Lösungen in unterschiedlichem Maße herabsetzen. Dadurch verringert sich auch die Gefahr, daß damit bei Seitenüberschreitung verbundene Seitennachladevorgänge gegebenenfalls zu Systemfehlern führen, die die Systemsteuerung der Datenverarbeitungsanlage sehr stark belasten und deren Verarbeitungsleistung entsprechend mindern.

Bei allen Ablaufvarianten wäre ein Nachladen der nächsten Maskenzeile auch ohne Anhalten der Aufbereitung möglich, wenn durch gesonderte Maßnahmen sichergestellt ist, daß der Speicherbereich RES-SP (FIG 2) für die Aufnahme einer Ergebniszeile jeweils rechtzeitig für die Aufnahme der nachfolgenden Ergebnisbytes der nächsten Ergebniszeile zur Verfügung steht, etwa durch zeitgerechtes Umladen in ein Pufferregister, aus dem dann unabhängig von der weiterlaufenden Aufbereitung zurückgeschrieben werden kann.

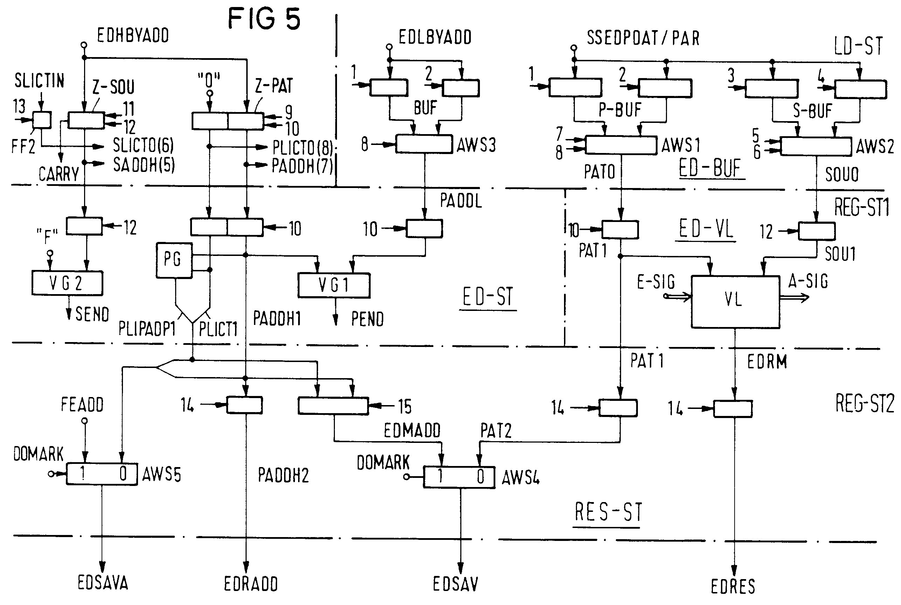

Ein ausführliches Strukturbild des Aufbereitungswerkes EDW zeigt FIG 5, das gleichzeitig die Pipelinestruktur mit zwei Registerstufen REG-ST1 und REG-ST2 und einer vorgeschalteten Laderegisterstufe LD-ST sowie die verschiedenen Datenflußwege erkennen läßt. Alle Register sind beispielsweise als Master-Slave-Schaltung ausgebildet, so daß zwei in Serie liegende Register von demselben Takt gesteuert werden können.

Entsprechend dem vorangehend bereits erläuterten Steuerungsablauf werden über den Daten- und Parameteranschluß SSEDPDAT/PAR die Zeilen der Aufbereitungsmaske und des Sendefeldes zugeführt. Die zugehörigen Pufferspeicher P-BUF und S-BUF sind als Wechselpuffer ausgebildet, die abwechselnd mit den Übernahmetakten 1 oder 2 bzw. 3 oder 4 geladen werden. Über nachgeschaltete Auswahlglieder AWS1 bzw. AWS2 wird mit jedem Maschinentakt CLMS der steuernden Mikroprogrammsteuerung μ-ST ein Byte PAT0 der Aufbereitungsmaske und gegebenenfalls ein Byte SOU0 des Sendefeldes der Aufbereitungsverknüpfungslogik ED-VL zugeführt, wobei die jeweilige Byteauswahl durch die Signale 7 und 8 bzw. 5 und 6 getroffen wird. Gleichzeitig mit jeder Übernahme einer Zeile der Aufbereitungsmaske wird die Byteadresse EDLBYADD für das jeweils letzte gültige Maskenbyte der Zeile in die Registerladestufe übernommen. Entsprechend der Verwendung von Wechselpuffern für die Maskenzeilen werden für diese Byteadresse zwei in gleicher Weise ansteuerbare Wechselpuffer BUF mit nachgeschaltetem Auswahlschalter AWS3 vorgesehen, die synchron angesteuert werden, damit jeweils das zu einer gepufferten Maskenzeile gehörige letzte gültige Maskenbyte richtig identifiziert und der Steuerung die zugehörige Byteadresse PADDL mitgeteilt werden kann. Bei einer Zeilenlänge von z.B. 16 Byte sind zur Identifizierung insgesamt 4 Bit erforderlich und je nach Länge der Aufbereitungsmaske ändern sich die Werte. Bei jeder vollen gültigen Zeile wird konstant der logische Wert "F" und bei der jeweils letzten Maskenzeile kann entsprechend dem tatsächlichen Ende der Maske jeder logische Wert zwischen "O" und "F" eingetragen werden.

Für die synchrone Steuerung der Auswahlschalter AWS1 und AWS3 ist ein zweigeteilter Maskenbytezähler Z-PAT vorgesehen, der mit der Übernahme der jeweils ersten Maskenzeile für einen Aufbereitungsbefehl durch den Übernahmetakt 9 voreingestellt wird. Den Einstellwert für den vier Bit umfassenden niederwertigen Zählerteil bildet die das erste gültige Maskenbyte in der jeweils ersten Maskenzeile kennzeichnende Byteadresse EDHBYADD, während der ebenfalls vier Bit umfassende höherwertige Zählerteil auf den festen Wert "OOOO" eingestellt wird. Beide Zählerteile bilden einen einheitlichen Zähler, der bei jeder Abarbeitung eines gültigen Maskenbytes fortgeschaltet wird, so daß der gesamte Zählerwert fortlaufend die jeweilige Maskenbyteadresse innerhalb der aufzubereitenden Maske liefert. Der niederwertige Zählwert PADDH steuert dabei als Signal 7 die Byteauswahl in der jeweils gültigen Maskenzeile, während der höherwertige Zählwert PLICTO mit seinem niederwertigsten Bit als Signal 8 die Umsteuerung zwischen den beiden Wechselpuffern für die einzelnen Maskenzeilen bewirkt.

Die beiden Adressenwerte PADDH und PADDL ermöglichen mittels des Vergleichers VG1 außerdem eine Überwachung des jeweiligen Zeilenendes oder des Maskenendes, was durch das Signal PEND der Steuerung angezeigt wird und bei einem Zeilenende zur einer Nachladeanforderung PEMPT führt, was noch gezeigt wird.

In ähnlicher Weise wird die Byteauswahl beim Sendefeld getroffen, indem mit jeder ersten Sendefeldzeile ein 4-Bit-Zähler Z-SOU mit der Byteadresse EDHBYADD für das erste gültige Sendefeldbyte der Zeile durch den Übernahmetakt 11 voreingestellt und bei jeder Verarbeitung eines Sendefeldbytes durch den Takt 12 um einen Schritt fortgeschaltet wird. Sein Zählwert SADDH liefert daher unmittelbar das Byteauswahlsignal 5 für den Auswahlschalter AWS2.

Mit dem Zähler Z-SOU ist desweiteren eine Ein-Bit-Stufe FF2 gekoppelt, die abhängig vom Ausgangsübertrag CARRY des Zählers Z-SOU über den Eingang SLICTIN mit dem Übernahmetakt 13 einstellbar ist und mit dem Wert SLICTO als Signal 6 die Zeilenumschaltung am Auswahlschalter AWS2 steuert. Außerdem wird anhand der jeweiligen Byteadresse SADDH mittels des Vergleichers VG2 das jeweilige Ende einer Zeile entsprechend dem logischen Festwert "F" überwacht und ein Steuersignal SEND für die Steuerung erzeugt.

Die von der Ladestufe LD-ST am Ausgang der Auswahlschalter AWS1 bis AWS3 und den Zählern Z-PAT und Z-SOU jeweils in einem Maschinenzyklus bereitgestellten Daten und Adressen werden im darauffolgenden Maschinenzyklus der nachfolgenden Registerstufe REG-ST1 zur Auswertung zugeführt, so daß die für die Ausgabesteuerung RES-ST benötigten Daten und Adressen im darauffolgenden Maschinenzyklus der nachfolgenden Registerstufe REG-ST2 übergeben werden können, von wo sie dann, wie bereits anhand von FIG 2 bereits beschrieben, weitergeleitet werden. Ein vollständiger Aufbereitungszyklus umfaßt also zwei Maschinenzyklen, wobei wegen der Pipelinestruktur nach Erreichen des eingeschwungenen Zustandes in jedem Maschinenzyklus ein Ergebnisbyte EDRES bereitgestellt wird, falls die Aufbereitung nicht durch einen Nachladevorgang für eine Masken- oder Sendefeldzeile unterbrochen wird. Dieses Ergebnisbyte besteht aus dem von der Verknüpfungslogik VL gelieferten Verknüpfungsergebnis EDRM, das in der Registerstufe REG-ST2 zwischengespeichert und als Aufbereitungsergebnis EDRES zusammen mit der vom niederwertigen Teil des Zählers Z-PAT abgeleiteten Byteadresse PADDH2 am Ausgang EDRADD der Ergebnissteuerung RES-ST bereitgestellt wird. Parallel dazu wird das vom Auswahlschalter AWS1 abgeleitete zugehörige und unveränderte Maskenbyte PAT0 über die beiden zwischengeschalteten Register und den Auswahlschalter AWS4 als EDSAV einem Sicherungsspeicher SAV-BUF (FIG 2) zugeführt und dort in einem durch die von dem kompletten Zähler Z-PAT abgeleitete Adresse EDSAVA bezeichneten Speicherplatz gespeichert. Diese Adresse setzt sich aus den Zählerwerten PLICTI und PADDH1 zusammen und steht jeweils durch ein Sicherungsbit PLIPADDP1 ergänzt über den Auswahlschalter AWS5 jeweils einen Maschinenzyklus früher bereit, damit der zugehörige Speicherplatz rechtzeitig ausgewählt werden kann.

Handelt es sich um einen Markierfall, dann werden durch das Signal DOMARK die Auswahlschalter AWS4 und AWS5 umgesteuert und statt des üblichen Maskenbyte PAT2 die vom Zähler Z-PAT abgeleitete und zwischengespeicherte komplette Adresse EDMADD über den Ausgang EDSAV für die Abspeicherung unter der einen Maschinenzyklus zuvor über den Ausgang EDSAVA bereitgestellten Adresse FEADD freigegeben.

Im nachfolgenden seien nun die Ableitungen der von der Pufferladesteuerung BUF-ST und der eigentlichen Aufbereitungssteuerung ED-ST erzeugten und in Verbindung mit FIG 3 und FIG 5 bereits angesprochenen Lade- und Übernahmesignale erläutert, wobei die in den einzelnen Figuren verwendeten übereinstimmenden Kennziffern für die einzelnen Signale sich auf dieselben Signale beziehen.

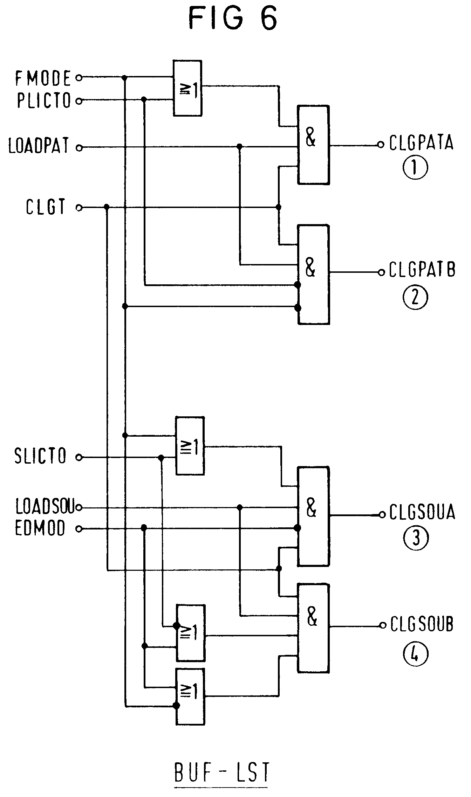

FIG 6 zeigt die Ladesteuerung BUF-LST für die Pufferspeicher P-BUF und S-BUF.

Bei Verwendung jeweils eines einzigen Pufferspeichers für eine gelesene Masken- oder Sendefeldzeile würde für jeden Pufferspeicher nur ein Ladetakt CLGPAT bzw. CLGSOU benötigt, die in einfacher Weise aus den Schnittstellen entsprechend CLGT∧LOADPAT bzw. CLGT∧LOADSOU durch jeweils ein UND-Glied erzeugt werden können. Bei Verwendung von Wechselpuffern für insgesamt jeweils zwei Masken- oder Sendefeldzeilen sind jeweils zwei Ladetakte CLGPATA und CLGPATB bzw. CLGSOUA und CLGSOUB erforderlich, wobei die Zuordnung zu den einzelnen Wechselpuffern in einfacher Weise abhängig von den in FIG 5 bereits erwähnten Zeilensignalen PLICTO bzw. SLICTO erfolgen kann entsprechend:

CLGPATA = CLGT ∧ LOADPAT ∧ PLICTO

CLGPATB = CLG1 ∧ LOADPAT ∧ $\overline{\text{PLICTO}}$

CLGSOUA = CLGT ∧ LOADSOU ∧ SLICTO

CLGSOUB = CLGT ∧ LOADSOU ∧ $\overline{\text{SLICTO}}$

Das setzt aber ein vorheriges entsprechendes Setzen von PLICTO bzw. SLICTO als Startbedingung voraus. Dies kann durch die zusätzlichen Betriebssignale FMODE und EDMOD umgangen werden, wobei sich weitere Steuerungsmöglichkeiten für den Lade- bzw. Nachladevorgang eröffnen, wie FIG 6 zeigt.

Das Signal FMODE=1 in Verbindung mit CLGT∧ LOADPAT bzw. CLGT∧LOADSOU führt in jedem Fall und unabhängig vom Signal PLICTO bzw. SLICTO dazu, daß jeweils der Puffer A zuerst geladen wird, während beim Signal FMODE=0 die Pufferauswahl vom Signal PLICTO bzw. SLICTO abhängig ist, die jeweiligen Wechselpuffer A und B als wechselseitig geladen werden.

Zusätzlich besteht mit dem Signal EDMOD die Möglichkeit, nach dem erstmaligen Laden beider Wechselpuffer für die Sendefeldzeilen die Wechselpuffer abhängig vom Signal SLICTO abwechselnd vorauslesend nachzuladen, falls einer der Wechselpuffer frei ist, oder aber ein Nachladen bei EDMOD=1 und FMODE=0 nur in den Puffer B zu erlauben. Die zuletzt genannte Variante ermöglicht, wie bereits erwähnt, ein Nachladen erst bei Bedarf und vermeidet ein unberechtigtes Vorauslesen einer Sendefeldzeile mit seinen gegebenenfalls nachteiligen Folgen im weiteren Verlauf der Aufbereitung.

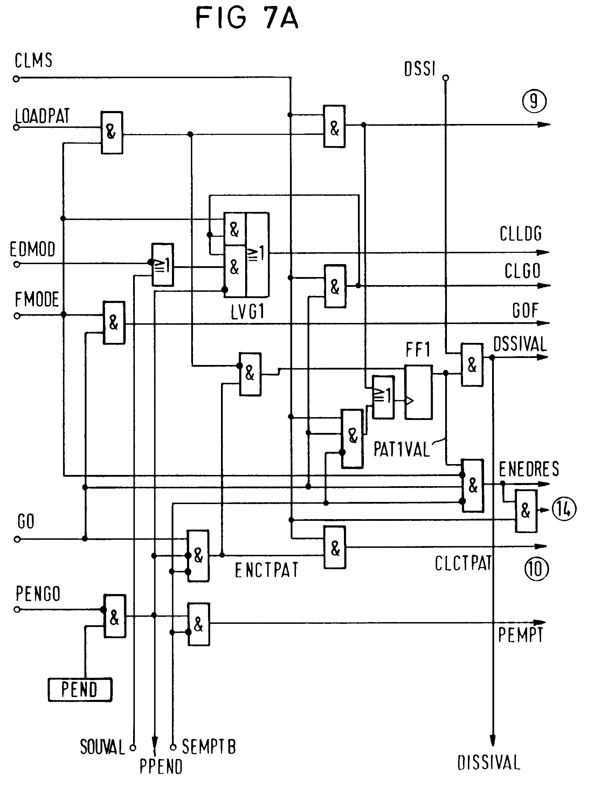

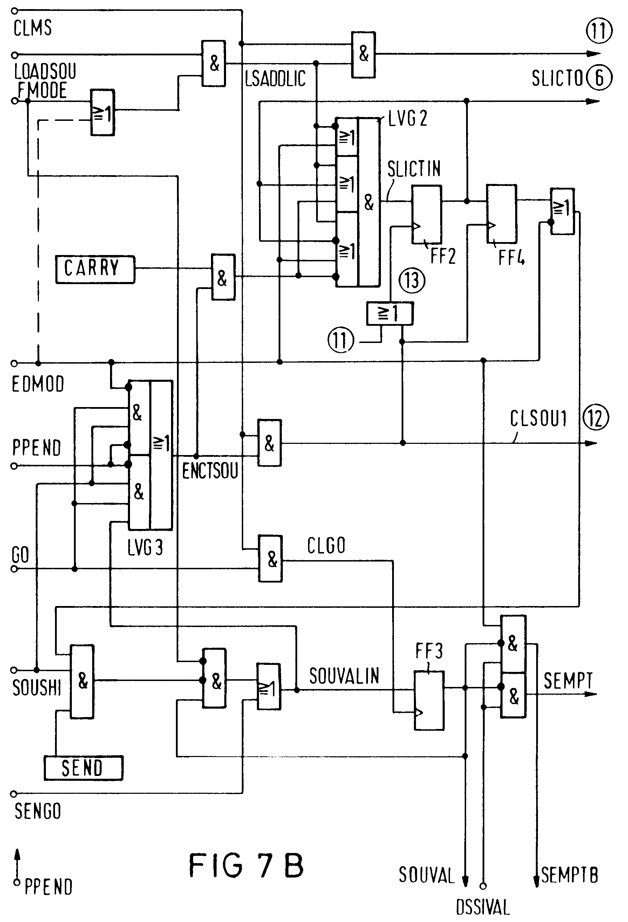

FIG 7 A und FIG 7 B zeigen die Ableitung der in der eigentlichen Aufbereitungssteuerung ED-ST erzeugten weiteren Steuersignale, wobei FIG 7 A sich überwiegend auf den von der Maskenverarbeitung abhängigen Teil und FIG 7 B sich auf den von der Sendefeldverarbeitung abhängigen Teil bezieht.

In beiden Figuren wird gemäß dem oberen Teil jeweils gleichzeitig zum Laden der Puffer durch die Schnittstellensignale CLMS∧FMODE ∧ LOADPAT bzw. LOADSOU ein Übernahmetakt 9 bzw. 11 für den Zähler Z-PAT bzw. Z-SOU in FIG 5 ausgelöst und damit die jeweils zugehörige Startadresse EDHBYADD zur Voreinstellung übernommen. Mit dem Übernahmetakt 9 wird gleichzeitig das Master-Slave-Flip-Flop FF1 getaktet und durch gleichzeitige Sperrung des dem Dateneingang vorgeschalteten Gatters durch die Signalkombination LOADPAT ∧ FMODE in die Ausgangslage gebracht.

Für den Fall, daß die Sendefeldzeilen gemäß der erläuterten Ablaufvariante gemäß FIG 4 C erst bei Bedarf geladen werden, wird das Voreinstellsignal 11 in FIG 7 B zusätzlich vom Signal EDMOD abgeleitet, wie gestrichelt angedeutet. In diesem Falle wird wegen der Aufrechterhaltung des Signals EDMOD=1 bis zum Ende der Aufbereitung das Voreinstellsignal 11 bei jedem Nachladen einer Sendefeldzeile erzeugt, so daß der Voreinstellungswert für den Zähler Z-SOU nach Laden der ersten Sendefeldzeile mit jedem Nachladen auf den konstanten Wert "OOOO" abgeändert werden muß.

Wie bereits in Zusammenhang mit FIG 5 erläutert, ist mit dem Zähler Z-SOU eine 1-Bit-Stufe gekoppelt, die die Zeilenumschaltung des Auswahlschalters AWS2 mit dem Ausgangssignal SLICTO oder 6 steuert. Diese 1-Bit-Stufe entspricht dem Master-Slave-Flip-Flop FF2 in FIG 7 B, das bei der Voreinstellung des Zählers Z-SOU mit dem Laden der ersten Sendefeldzeile durch das dem Dateneingang vorgeschaltete Verknüpfungsglied LVG2 entsprechend LSADDLIC ∧ EDMOD=0 auf logisch "O" gesetzt wird. Im nachfolgenden bleibt dieser Schaltzustand bestehen, bis mit dem Abarbeiten der ersten Sendefeldzeile im ersten Wechselpuffer, gesteuert durch den Fortschaltetakt 12, der Zähler Z-SOU ein Überlaufsignal CARRY bei freigegebener Sendefeldverarbeitung entsprechend ENCTSOU=1 liefert und daher auf den zweiten Wechselpuffer umgesteuert wird. Da beim weiteren Nachladen EDMOD=1 fortbesteht, bleibt auch das Flip-Flop FF2 gesetzt, und es wird nur noch in den zweiten Wechselpuffer nachgeladen und aus diesem heraus verarbeitet.

Bei der Ablaufvariante nach FIG 4 C ohne Wechselpuffer für die Sendefeldzeilen könnte auf diese Steuerung verzichtet werden.

Nach Abschluß des Ladevorganges wird die Aufbereitungssteuerung ED-ST, wie anhand von FIG 4 bereits erläutert, mit GO=1 allgemein freigegeben. Da PEND und somit PPEND noch wirksam ist, bleibt die Verarbeitung gestoppt, bis durch das kurzzeitige Schnittstellensignal PENGO das Freigabesignal ENCTPAT für die Maskenverarbeitung erzeugt wird, das dann mit jedem Maschinentakt CLMS den Fortschalte- und Übernahmetakt CLCTPAT als Signal 10 liefert. Wegen der Übernahme des neuen Wertes PADDH in die Registerstufe REG-ST1 mit dem Signal 10 bleibt PEND jetzt unwirksam, bis der Vergleicher VG1 wieder anspricht. Das von PEND ausgehende Signal PPEND führt gleichzeitig zur Nachladeanforderung PEMPT,

7

wenn nicht bereits die Sendefeldzeile abgearbeitet ist und SEMPTB = 1 gilt.

Mit dem Signal ENCTPAT wird gleichzeitig mit der Auslösung des Signals 10 auch das Flip-Flop FF1 gesetzt und das bereitgestellte Maskenbyte mit PAT1VAL für gültig erklärt. Damit wird auch das Signal ENEDRES ausgelöst, falls keine Sperrbedingung vorliegt, so daß in Verbindung mit dem Maschinentakt CLMS des jeweils nächsten Maschinenzyklusses daraus der Übernahmetakt 14 für die Ergebnissteuerung RES-ST ableitbar ist. Außerdem wird das Ausgangssignal PAT1VAL des Flip-Flops FF1 in Verbindung mit dem von der Verknüpfungslogik VL gelieferten Steuersignal DSSI zum Steuersignal DSSIVAL verknüpft, das anzeigt, daß eine Dezimalziffer des Sendesfeldes für die Verarbeitung eines Maskenbytes benötigt wird.

Die Verknüpfung FMODE ∧ GO liefert desweiteren das Steuersignal GOF, das allgemein als Rücksetzsignal nach dem Start mit GO = 1 wirkt und eindeutige Ausgangsbedingungen für die Aufbereitungssteuerung ED-ST und die Verknüpfungslogik VL schafft. Desweiteren liefert die Verknüpfung CLMS ∧ GO das Taktsignal CLG0 für die Verknüpfungslogik.

Mit dem Start der Aufbereitung durch GO = 1 wird in Verbindung mit GO ∧ FMODE = GOF = 1 in der Verknüpfungslogik VL ein Signal SOUSHI ausgelöst, das die Bereitstellung des ersten Sendefeldbytes in der Registerstufe REG-ST1 anfordert. Dieses Signal SOUSHI dient einerseits über das Verknüpfungsglied LVG3 zur Erzeugung des Signals ENCTSOU, das in Verbindung mit dem Maschinentakt CLMS das Fortschalte- und Übernahmesignal CLSOU1 oder 12 liefert und das Signal CARRY des Zählers Z-SOU für das Verknüpfungsglied LVG2 freigibt.

Das Signal ENCTSOU wird zum einen ausgelöst, wenn EDMOD = 0 gilt und der Sendefeldpuffer durchgängig als Wechselpuffer mit Vorauslesen einer Sendezeile für den jeweils freien Wechselpuffer betrieben wird. In diesem Falle wird das Signal ENCTSOU nur unterdrückt, wenn mit PPEND = 1 eine Maskenzeile nachgeladen werden muß. Gilt dagegen EDMOD = 1, dann ist die Erzeugung des Signals ENCTSOU auch vom Signal SOUVALIN abhängig. Dieses Signal wird in der Regel beim Start der Aufbereitung mit dem Signal SENGO wirksam und nachfolgend im Master-Slave-Flip-Flop FF3 abhängig vom Takt CLG0 gespeichert, so daß es über die Rückkopplung aufrechterhalten bleibt, bis es wieder unwirksam geschaltet wird. Dieses Unwirksamschalten erfolgt, wenn einerseits alle Sendefeldbytes abgearbeitet sind und daher das Signal SEND = 1 vom Vergleicher VG2 in FIG 5 geliefert wird und wenn andererseits das Signal SOUSHI = 1 den Bedarf eines weiteren Sendefeldbytes für die Verarbeitung anzeigt. Wird im vorliegenden Fall mit Wechselpuffern gearbeitet und nach dem Laden beider Wechselpuffer in Folge EDMOD = 1 nur in den zweiten Wechselpuffer entsprechend SLICTO = 1 nachgeladen, dann muß zusätzlich dieses Signal berücksichtigt werden. Da das das Signal SLICTO liefernde Flip-Flop FF2 der Ladestufe LD-ST von FIG 5 zuzuordnen ist, ist für die zeitgerechte Bereitstellung für die Auswertung in der nachfolgenden Registerstufe REG-ST1 dem Flip- Flop FF2 ein weiteres Flip-Flop FF4 nachgeschaltet, das ebenfalls vom Übernahmesignal CLSOU1 entsprechend dem Signal 12 getaktet wird.

Steht schließlich kein von der Maskenverarbeitung mit SOUSHI angefordertes Sendefeldbyte mehr zur Verfügung, wird das Signal SOUVALIN unwirksam und damit das nachgeschaltete Flip-Flop FF3 auf logisch "O" gesetzt. Da erst in Verbindung mit dem Steuersignal DSSIVAL von FIG 7 A eine Nachladeanforderung SEMPT für eine neue Sendefeldzeile ausgelöst wird, kann die Maskenverarbeitung vorerst fortgesetzt werden, bis ein weiteres Sendefeldzeichen tatsächlich benötigt wird, auch wenn kein Sendefeldzeichen mehr im Sendefeldpuffer vorhanden ist.

Bei Verwendung von Wechselpuffern für die Sendefeldzeilen mit abwechselndem Nachladen, wenn einer der Wechselpuffer frei ist gemäß EDMOD = 0,steht in der Regel immer ein benötigtes Sendefeldbyte zur Verfügung, so daß die Maskenverarbeitung nicht gebremst zu werden braucht. Erfolgt dagegen das Nachladen gemäß EDMOD = 1 und SLICTO = 1 immer nur in den zweiten Wechselpuffer, dann muß, sobald alle Sendefeldbytes aus beiden Wechselpuffern abgearbeitet sind und zusätzlich ein weiteres Sendefeldzeichen benötigt wird, die Maskenverarbeitung vorübergehend eingestellt werden, bis eine neue Sendefeldzeile nachgeladen ist. Dies wird mit dem zusätzlich in FIG 7 B abgeleiteten Signal SEMPTB bewirkt, das in der bereits beschriebenen Weise in den Steuerungsteil von FIG 7 A eingreift. Lediglich bei Verwendung von Einzelpuffern kann auf dieses zusätzliche Signal verzichtet und stattdessen auf das Nachladeanforderungssignal SEMPT unmittelbar anstelle des Signals SEMPTB zurückgegriffen werden.

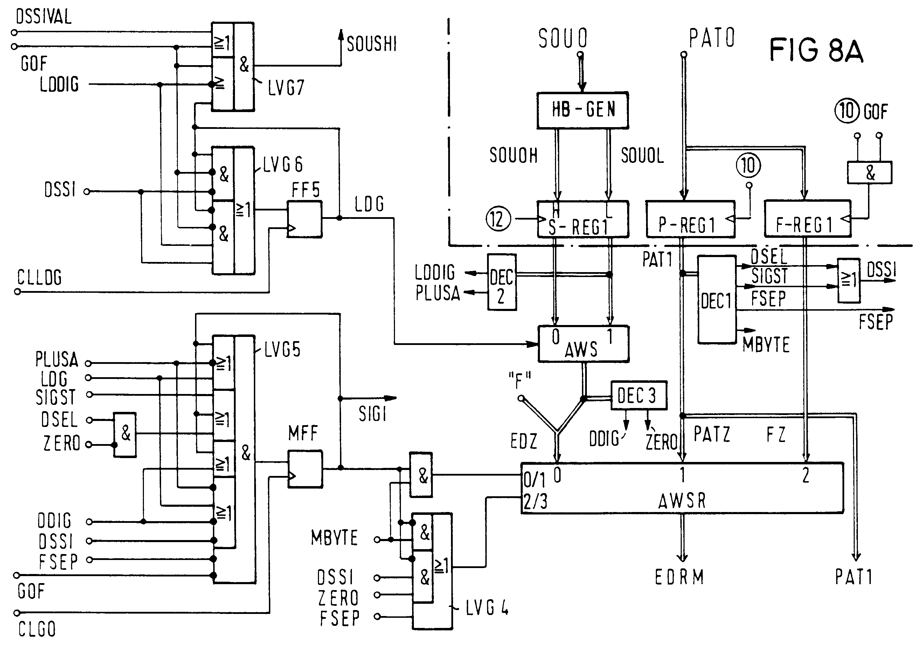

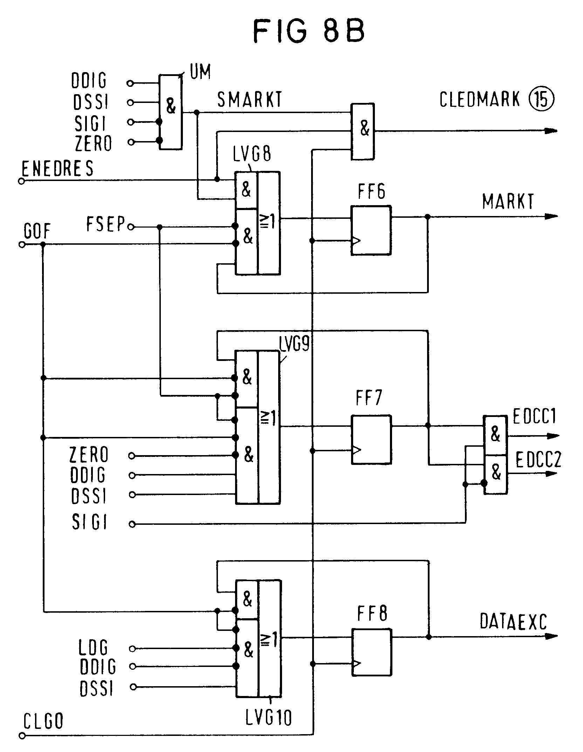

Mit der in FIG 8 A und FIG 8 B dargestellten Verknüpfungslogik VL wird die eigentliche Aufbereitung des bereitgestellten Sendefeldes anhand der Aufbereitungsmaske durchgeführt.

Das vom Auswahlschalter AWS1 in FIG 5 jeweils zur Verfügung gestellte Maskenbyte PAT0 mit Sicherungsbit wird mit dem Übernahmetakt 10 in das Register P-REG1 der Registerstufe REG-ST1, wie auch aus FIG 5 ersichtlich, übernommen. Parallel dazu wird das jeweils erste Maskenbyte einer Maske abhängig vom Signal GOF = 1 in ein Register F-REG1 übernommen, so daß es als Füllzeichen FZ zur Verfügung steht.

Das vom Auswahlschalter AWS2 in FIG 5 jeweils zur Verfügung gestellte Sendefeldbyte SOU0 in Form

8

gepackter Dezimalziffern wird dagegen nicht direkt in das Register S-REG1 mit dem Übernahmetakt 12 übernommen, sondern erst abgewandelt, indem zunächst die beiden gepackten Dezimalziffern bzw. die gepackte Dezimalziffer und ein Vorzeichen je Byte mit gemeinsamem Sicherungsbit durch Bildung zweier eigenständiger 4-Bit-Halbbytezeichen SOUH und SOUL mit jeweils eigenem Sicherungsbit aufgetrennt werden, was bezüglich der eigentlichen Datenbits durch einfaches Aufspalten der Datenbitleitungen möglich ist. Aus den vier Bitstellen des einen Halbbytes wird dann ein Sicherungsbit abgeleitet und diesem Halbbyte zugesetzt, während das Sicherungsbit für das andere Halbbyte über eine exklusive ODER-Verknüpfung des neu generierten Sicherungsbits mit dem ursprünglich mitgeführten Sicherungsbit des Sendefeldbytes gewonnen wird. Diese Abwandlung des Sendefeldbytes SOU0 bewirkt der dem Register S-REG1 vorgeschaltete Halbbyte-Generator HB-GEN.

Durch ein dem Register S-REG1 nachgeschaltetes Auswahlschaltglied AWS wird abhängig von dem Signal LDG jeweils eines der beiden Halbbytes ausgewählt und durch Ergänzung des Zonenzeichens "F" in eine entpackte Dezimalzahl mit einem Sicherungsbit, das dem Sicherungsbit des jeweiligen Ziffernhalbbytes entspricht, umgewandelt. Es wird also nicht, wie allgemein üblich, das Entpacken gesondert vor Ausführung der Aufbereitung durchgeführt, sondern in die Aufbereitung integriert, wobei der übliche Schutz durch ein Sicherungsbit in einfacher Weise gewahrt bleibt.

Während des Aufbereitungsprozesses kann entsprechend der Funktion der Aufbereitungsbefehle ED und EDMK ein Byte der Maske auf drei verschiedene Arten behandelt werden:

1. Es bleibt unverändert, so daß als Ergebnis das Maskenzeichen PATZ geliefert wird.

2. Es wird durch eine entpackte Dezimalziffer EDZ aus dem Sendefeld ersetzt.

3. Es wird durch das erste Byte der Maske, nämlich das Füllzeichen FZ, ersetzt.

Entsprechend wird das Ergebnis EDRM von einem der drei Register P-REG1, S-REG1 oder F-REG1 geliefert und vom Auswahlschalter AWSR ausgewählt.

Welcher dieser drei Fälle eintritt, wird bestimmt durch

- das Maskenbyte PAT1
- einen Steuerschalter MFF
- den Wert des Sendefeldzeichens

Zu diesem Zweck wird das zu verarbeitende Maskenbyte mit einem Decoder DEC1 überprüft, um festzustellen, welche Steuerungsfunktion damit verbunden ist. Weiterhin wird mit einem Decoder DEC2 jeweils das niederwertige Halbbyte am Ausgang des Registers S-REG1 auf das Vorliegen eines Vorzeichens oder einer Dezimalziffer überprüft, wobei das Signal LDDIG eine Dezimalziffer und das Signal PLUSA ein positives Vorzeichen anzeigt. Schließlich wird mit einem Decoder DEC3 die jeweils am Ausgang des Auswahlschalters AWS bereitstehende Dezimalziffer bezüglich ihres Wertes überprüft, wobei das Signal DDIG eine Dezimalziffer und das Signal ZERO eine Null anzeigt.

Das Maskenbyte PAT1 bewirkt vier Steuerungsfunktionen, nämlich

DSEL:        Ziffernauswahl
SIGST:       Beginn geltender Ziffern
FSEP:        Feldteiler
MBYTE:       Einzufügendes Zeichen

Diese Steuerungsfunktionen werden vom Decoder DEC1 ermittelt, und die damit verbundenen Auswirkungen ergeben sich aus der nachfolgenden Tabelle:

| Steuersignale | | | | Folgeergebnis | | |
|---|---|---|---|---|---|---|
| DEC1 | $MFF_{Alt}$ | DEC3 | DEC2 | EDRM | $MFF_{Neu}$ (SIGI) | Zeile |
| DSEL | 0 | DDIG ZERO | * | FZ | 0 | 1 |
| | | DDIG $\overline{ZERO}$ | $\overline{PLUSA}$ | EDZ | 1 | 2 |
| | | | PLUSA | EDZ | 0 | 3 |
| | 1 | DDIG | $\overline{PLUSA}$ | EDZ | 1 | 4 |
| | | | PLUSA | EDZ | 0 | 5 |
| SIG ST | 0 | DDIG ZERO | $\overline{PLUSA}$ | FZ | 1 | 6 |
| | | | PLUSA | FZ | 0 | 7 |
| | | DDIG $\overline{ZERO}$ | $\overline{PLUSA}$ | EDZ | 1 | 8 |
| | | | PLUSA | EDZ | 0 | 9 |
| | 1 | DDIG | $\overline{PLUSA}$ | EDZ | 1 | 10 |
| | | | PLUSA | EDZ | 0 | 11 |
| FSEP | * | * | * | FZ | 0 | 12 |
| MBYTE | 0 | * | * | FZ | 0 | 13 |
| | 1 | * | * | PAZ | 1 | 14 |
| * ohne Einfluß auf das Folgeergebnis | | | | | | |

Wie aus dieser Tabelle ersichtlich, wird über den Auswahlschalter AWSR ein Füllzeichen FZ immer dann ausgewählt, wenn der Steuereingang 2/3 über das logische Verknüpfungsglied LVG4 wirksam geschaltet wird, wenn also unter Berücksichtigung, daß

DSSI = DSEL v SIGST gilt, die Signalbedingung

$(\overline{SIGI} \land DSSI \land ZERO)$ v $(\overline{SIGI} \land MBYTE)$ v FSEP

erfüllt ist. Ist der Steuereingang 2/3 dagegen unwirksam, erfolgt die Auswahl über den Steuereingang 0/1, wobei entsprechend SIGI $\land$ MBYTE = 1 das Maskenbyte PATZ vom Eingang 1, ansonsten aber die bereitgestellte entpackte Dezimalziffer EDZ am Eingang 0 ausgewählt wird. Der das Steuersignal SIGI liefernde Markierschalter in Form des Masters-Slave-Flip-Flops MFF wird durch das logische Verknüpfungsglied LVG5 einerseits immer beim Start der Maskenverarbeitung mit GOF = 1 und außerdem bei einer Feldteilung entsprechend FSEP = 1 auf logisch "O" gesetzt. Weiterhin wird dieser Setzzustand gemäß den Zeilen 5 und 11 der Tabelle erzwungen, wenn gleichzeitig PLUSA = 1, DDIG = 1, DSSI = 1 und zusätzlich LDG = 0 gilt, also in jedem Falle auch eine entpackte Dezimalzahl EDZ zur Verfügung steht. Im übrigen wird der Markierschalter MFF entsprechend den gezeigten und aus der Tabelle ableitbaren Signalverknüpfungen in den logischen Zustand "I" überführt, und dieser Markierzustand wird aufrecht erhalten, solange keine der Rücksetzbedingungen erfüllt ist.

Der Auswahlschalter AWS für das rechte oder linke Halbbyte des im Register S-REG1 zur Verfügung stehenden Sendefeldbytes wird abhängig vom Signal LDG gesteuert, das von dem Verknüpfungsglied LVG6 mit nachgeschaltetem Master-Slave-Flip-Flop FF5 abgeleitet wird, wobei die Verarbeitung eines Sendefeldbytes immer von links nach rechts erfolgt. Zu Beginn einer Aufbereitung wird das Flip-Flop FF5 durch das Signal GOF = 1 ebenfalls in den logischen Zustand "O" überführt. Danach wird das Flip-Flop, solange mit dem Signal DSSI vom Decoder DEC1 angezeigt wird, daß eine Dezimalziffer des Sendefeldes benötigt wird, mit jedem von der Aufbereitungssteuerung ED-ST gelieferten Taktimpuls CLLDG abhängig vom eigenen Ausgangssignal LDG abwechselnd in den logischen Zustand "I" oder "O" überführt. Eine Umschaltung in den logischen Zustand "I" erfolgt aber nur, wenn das Signal LDDIG vom Decoder DEC2 das Vorliegen einer zu verarbeitenden entpackten Dezimalziffer EDZ durch das niederwertige Halbbyte SOUOL anzeigt. Andernfalls bleibt das Flip-Flop FF5 im logischen Zustand "O", und es muß erst ein neues Sendefeldbyte SOU0 im Register S-REG1 bereitgestellt werden.

Diese Bereitstellung erfolgt abhängig vom Signal SOUSHI am Ausgang des Verknüpfungsgliedes LVG7, das zu Beginn einer Aufbereitung unmittelbar durch das Steuersignal GOF = 1 ausgelöst wird. Danach wird ein Bereitstellungssignal SOUSHI nur bei Bedarf ausgelöst, wenn einerseits mit dem Steuersignal DSSIVAL eine Verarbeitungsanforderung nach einer Dezimalziffer aus dem Sendefeld angezeigt wird und andererseits mit LDG = 1 auf die Verarbeitung des niederwertigen Halbbytes SOUOL umgeschaltet ist. Entfällt diese Umschaltung, weil das niederwertige Halbbyte ein Vorzeichen ist, dann übernimmt das Signal LDDIG die Auslösung des Bereitstellungssignals SOUSHI.

Der Steuertakt CLLDG für das Flip-Flop FF5 wird von der Aufbereitungssteuerung ED-ST durch das Verknüpfungsglied LVG1 in FIG 7 A geliefert und erstmals beim Start der Aufbereitung durch FMODE ∧ CLGO = 1 ausgelöst, um das Flip-Flop FF5 auf den logischen Wert "O" einzustellen. Nachfolgend ist die weitere Erzeugung des Steuertaktes CLLDG davon abhängig, daß ein zu verarbeitendes Sendefeldbyte entsprechend dem Ausgangssignal SOUVAL = 1 des Flip-Flops FF3 in FIG 7 B zur Verfügung steht und der Maskenpuffer entsprechend PPEND = 0 kein Nachladen einer Maskenzeile erfordert.

FIG 8 B zeigt die Ableitung der von der Verknüpfungslogik VL für die Aufbereitung zusätzlich gelieferten Signale. Mit dem oberen Teil wird das Vorliegen eines Markierfalles beim Befehl EDMK überwacht. Grundbedingung hierfür ist, daß die Maskenverarbeitung eine von Null abweichende Dezimalziffer des Sendefeldes erfordert, was mit dem UND-Glied UM überwacht wird. Das Ausgangssignal SMARKT liefert dann zusammen mit dem Ergebnisfreigabesignal ENEDRES von FIG 7 A und dem Takt CLG0 das Übernahmesignal CLEDMARK oder 15 für die Übernahme der vom Zähler Z-PAT abgeleiteten und durch ein Sicherungsbit PLIPADP1 ergänzten Maskenbyteadresse als Markieradresse EDMADD in die Registerstufe REG-ST2 von FIG 5. Außerdem wird gleichzeitig über das logische Verknüpfungsglied LVG8 das nachgeschaltete Master-Slave-Flip-Flop FF6 mit dem Takt CLG0 in den logischen Zustand "I" überführt und das Signal MARKT für die Mikroprogrammsteuerung μ-ST erzeugt. Das Flip-Flop FF6 bleibt aber nur dann in diesem Zustand und löst die Markierung am Ende der Aufbereitung in Folge der Rückkopplung aus, wenn es sich um das letzte Feld der Aufbereitungsmaske handelt und kein FSEP = 1 nachfolgend mehr auftritt.

Im mittleren Teil wird der am Ende einer Befehlsausführung bereitzustellende Bedingungscode EDCC1/2 gebildet. Das dem logischen Verknüpfungsglied LVG9 nachgeschaltete Master-SlaveFlip-Flop FF7 wird in den logischen Zustand "I" überführt, wenn bei einer Ziffernanforderung entsprechend DSSI = 1 eine von Null verschiedene Dezimalziffer vorliegt, also DDIG∧$\overline{\text{ZERO}}$ gilt. Dagegen wird der logische Zustand "O" erzwungen, wenn beim Start GOF = 1 wirksam ist oder wenn FSEP = 1 im Laufe der Aufbereitung auftritt, auch wenn das Flip-Flop FF7 zwischenzeitlich gesetzt war. Das nicht gesetzte Flip-Flop führt dann unabhängig von der Stellung des Markierschalters MFF in FIG 8 A entsprechend SIGI zur Anzeige "O" und im gesetzten Zustand mit SIGI = 1 zur Anzeige "I" bzw. mit SIGI = 0 zur Anzeige "2".

Im unteren Teil wird schließlich mit dem logischen Verknüpfungsglied LVG10 überprüft, ob bei Anforderung einer Dezimalziffer aus dem Sendefeld entsprechend DSSI = 1 bei Auswahl des höherwertigen Halbbytes SOUOH entsprechend LDG = 0 mit DDIG = 0 eine von einer Dezimalziffer abweichende Codeverschlüsselung vorliegt. Ist letzteres der Fall, wird das nachgeschaltete Master-SlaveFlip-Flop FF8 mit dem Takt CLG0 gesetzt und dieser Zustand mit dem Signal DATAEXC gemeldet. Auch in diesem Falle wird trotz der Rückkopplung beim Start mit GOF = 1 jeweils der logische Zustand "O" erzwungen.

**Patentansprüche**

**1.** Datenverarbeitungsanlage, die neben anderen zu verarbeitenden Befehlen Befehle (ED, EDMK) zur Aufbereitung von Datenfeldern in eine druckgerechte Form auszuführen hat, indem eine gepackte Dezimalzahl variabler Länge eines als Operand zur Verfügung gestellten Sendefeldes entpackt und anhand der Zeichen einer als weiterer Operand verfügbaren Aufbereitungsmaske vorgegebener Länge aufbereitet wird, indem die von der Befehlsverarbeitungssteuerung (PLU/EXU) der Datenverarbeitungsanlage ermittelten Befehle (ED, EDMK) zur Aufbereitung von Datenfeldern in der üblichen Weise durch Bereitstellung der benötigten Operanden für die Ausführung vorbereitet werden, daß aber die eigentliche Ausführung der Befehle einer mit der Befehlsverarbeitungssteuerung (PLU/EXU) gekoppelten gesonderten Aufbereitungseinrichtung (EDW) übertragen wird,
**dadurch gekennzeichnet,** daß das gesonderte Aufbereitungswerk (EDW) eine aus Registern als Pufferspeicher (P-BUF, S-BUF) bestehende Ladestufe (LD-ST) mit Ladesteuerung für die Aufbereitungsmaske und für das Sendefeld oder für Teile derselben und eine mit diesen Pufferspeichern gekoppelte Verknüpfungslogik (ED-VL) mit Decodiereinrichtungen für die jeweils von den Registern bereitgestellten Maskenbytes und Halbbytes des Sendefeldes zur Ermittlung der Steuersignale für die Auswahl des jeweils zu berücksichtigenden Halbbytes des Sendefeldes und des jeweiligen Ergebniszeichens zur Übertragung in ein Ergebnisregister aufweist und daß ein Vorausladen des ganzen Sendefeldes oder von Teilen desselben vor dem Start der Aufbereitung und/oder ein Nachladen von Teilen während der Aufbereitung in die Register der Ladestufe nur erfolgt, wenn damit keine Seitengrenzenüberschreitung zu einer nicht verfügbaren Seite verbunden ist.

2. Datenverarbeitungsanlage nach Anspruch 1,
   **dadurch gekennzeichnet,**
   - daß die Aufbereitungsmaske und das Sendefeld der Ladestufe (LD-ST) jeweils in Form von einzelnen, auf eine mögliche Seitengrenze ausgerichteten Datenzeilen entsprechend der Breite des Übertragungsleitungssystems ohne linksbündige Ausrichtung von Aufbereitungsmaske und Sendefeld zusammen mit einer Byteadresse (EDHBYADD) für das jeweils erste gültige Byte in der jeweils ersten Datenzeile und einer weiteren Byteadresse (EDLBYADD) für das jeweils letzte Maskenbyte übergeben und in den als Pufferspeicher (P-BUF, S-BUF) dienenden Registern gespeichert werden und
   - daß die Aufbereitung jeweils mit den durch die Byteadressen (EDHBYADD) gekennzeichneten ersten Bytes von Aufbereitungsmaske und Sendefeld beginnt und mit Erreichen des durch die weitere Byteadresse (EDLBYADD) gekennzeichneten letzten Maskenbytes endet.

3. Datenverarbeitungsanlage nach Anspruch 2,
   **dadurch gekennzeichnet,** daß die Aufbereitungseinrichtung (EDW) pipelinestrukturiert aus drei Stufen mit einer gemeinsamen hartgesteuerten Ablaufsteuerung (ED-ST) aufgebaut ist, deren erste Stufe aus der Ladestufe (LD-ST) besteht, und daß der Ladestufe (LD-ST) zwei die Verknüpfungslogik (ED-VL) bildende Registerstufen (REG-ST1 und REG-ST2) nachgeschaltet sind, von denen die eine (REG-ST1) eine Aufbereitungslogik (VL) speist und die wesentlichen Steuersignale für den Fortgang der Aufbereitung liefert und die andere (REG-ST2) die von der vorangehenden Registerstufe (REG-ST1) gelieferten Aufbereitungsergebnisse für die Übernahme durch die zuständigen Einheiten (RES-SP, SAV-BUF) der Datenverarbeitungsanlage bereitstellt, wobei die Ablaufsteuerung (ED-ST) in Zusammenarbeit mit der übergeordneten Befehlsverarbeitungssteuerung (PLU/EXU) die Übernahme der jeweils bereitgestellten Teile der Aufbereitungsmaske und des Sendefeldes in die entsprechenden Pufferspeicher (P-BUF, S-BUF) und gegebenenfalls deren Nachladen veranlaßt, nach Start der Aufbereitung durch die Befehlsverarbeitungssteuerung (PLU/EXU) die Verknüpfungslogik (ED-VL) schrittweise mit den Zeichen (PAT0) der bereitgestellten Aufbereitungsmaske und den benötigten Dezimalziffern (SOU0) des Sendefeldes versorgt und das Ergebnis (z.B. EDRES) der Aufbereitung für die Übergabe an die aufnehmenden Einheiten der Datenverarbeitungsanlage bereitstellt.

4. Datenverarbeitungsanlage nach Anspruch 3,
   **dadurch gekennzeichnet,** daß die Aufbereitungseinrichtung (EDW) durch ein Freigabesignal (GO) der Befehlsverarbeitungssteuerung (PLU/EXU) freigegeben wird und den Steuertakt (CLG0) für die Aufbereitung liefert, wobei der Freigabestart zu Beginn der Ausführung eines Aufbereitungsbefehls gesondert gekennzeichnet wird (mit FMODE = 1) und dadurch die erforderlichen Ausgangsbedingungen sichergestellt werden, und daß die Aufbereitungseinrichtung (EDW) bei jeder intern auftretenden Sperrbedingung (z.B. PEND,SEND) sofort gestoppt wird und der anschließende Wegfall des Freigabesignals (GO) den Stoppzustand sichert, bis die Sperrbedingungen von der Befehlsverarbeitungssteuerung (PLU/EXU) wieder aufgehoben werden (z.B. mit PENGO oder SENGO).

5. Datenverarbeitungsanlage nach Anspruch 4,
   **dadurch gekennzeichnet,** daß mit jedem Steuertakt (CLG0) Übernahmetakte (10, 12) für die erste Registerstufe (REG-ST1) erzeugt werden, wenn die vorgeschalteten Puffer (P-BUF, S-BUF) der Ladestufe (LD-ST) geladen sind, wodurch die in der Ladestufe (LD-ST) bereitgestellten Zeichen und Adressen übernommen und die einzelnen Zeichen (PAT0) der Aufbereitungsmaske schrittweise der Verarbeitung durch die Verknüpfungslogik (ED-VL) zugeführt werden.

6. Datenverarbeitungsanlage nach Anspruch 5,
   **dadurch gekennzeichnet,** daß die aus dem Pufferspeicher (S-BUF) ausgewählten und die Dezimalziffern in gepackter Form enthaltenden Sendefeldbytes (SOU0) erst in zwei selbständige Halbbytes (SOUOH und SOUOL) mit eigenem Sicherungsbit umgewandelt werden, bevor sie in das zuständige Register (S-REG1) der ersten Registerstufe (REG-ST1) übernommen werden, daß die jeweils zu bildende entpackte Dezimalziffer (EDZ) durch Voranstellen des Zonenzeichens (z.B. "F") beim jeweils ausgewählten Halbbyte (SOUOH oder SOUOL) gewonnen wird, wobei eine Umschaltung auf das niederwertige Halbbyte (SOUOL) nur erfolgt, wenn es eine Dezimalziffer (Signal LDDIG) enthält, und daß davon abhängig die Übernahme eines neuen Sendefeldbytes (SOU0) in das Register (S-REG1) der ersten Registerstufe (REG-ST1) immer dann angefordert wird (mit SOUSHI = 1), wenn die in einem zur Verarbeitung bereitgestellten Sendefeldbyte (SOU0) vorhandenen Dezimalziffern verbraucht sind.

7. Datenverarbeitungsanlage nach einem der Ansprüche 3 bis 6, **dadurch gekennzeichnet,** daß zur Sicherung der Wiederholbarkeit eines Aufbereitungsbefehles (ED, EDMK) im Fehlerfall die verarbeiteten Zeichen (PAT1) der Aufbereitungsmaske parallel zur Abspeicherung der Ergebnisbytes (EDRES) vorübergehend gespeichert werden, bis der jeweilige Aufbereitungsbefehl fehlerfrei ausgeführt ist.

8. Datenverarbeitungsanlage nach einem der Ansprüche 3 bis 7, **dadurch gekennzeichnet,** daß der Pufferspeicher (P-BUF) für die Aufbereitungsmaske als Wechselpuffer ausgebildet ist, daß vor Start der Aufbereitung beide Wechselpuffer (A und B) nacheinander mit je einer Zeile der Aufbereitungsmaske geladen werden, daß jeder danach infolge Abarbeitung der jeweiligen Maskenzeile freigewordene Wechselpuffer mit einer weiteren Maskenzeile nachgeladen wird, bis alle Zeilen der Aufbereitungsmaske an die Aufbereitungseinrichtung (EDW) übergeben sind, wobei die Befehlsverarbeitungssteuerung (PLU/EXU) bei jedem Ladevorgang das Laden der letzten Maskenzeile anhand der im Befehl vorgegebenen Längenangabe (L) überwacht und vor bzw. bei jedem Nachladevorgang die von der Aufbereitungseinrichtung (EDW) erstellte Ergebniszeile an die Stelle der verarbeiteten Maskenzeile zurückschreibt.

9. Datenverarbeitungsanlage nach einem der Ansprüche 3 bis 7 oder 8, **dadurch gekennzeichnet,** daß vor Start der Aufbereitung lediglich der Pufferspeicher (P-BUF) für die Aufbereitungsmaske geladen wird, daß dagegen der Pufferspeicher (S-BUF) für das Sendefeld erst durch eine bei der Verarbeitung der Maskenzeichen (PAT1) entstehende Anforderung (DSSI/DSSIVAL) geladen wird.

10. Datenverarbeitungsanlage nach einem der Anprüche 3 bis 7 oder 8, **dadurch gekennzeichnet,** daß der Pufferspeicher (S-BUF) für das Sendefeld als Wechselpuffer ausgebildet ist und daß vor Start der Aufbereitung beide Wechselpuffer (A und B) nacheinander mit je einer Zeile des Sendefeldes geladen werden.

11. Datenverarbeitungsanlage nach Anspruch 10, **dadurch gekennzeichnet,** daß jeder infolge Abarbeitung einer Sendefeldzeile freiwerdende Wechsel- puffer ohne Unterbrechung der laufenden Aufbereitung mit einer weiteren Sendefeldzeile nachgeladen wird, bis keine weiteren Dezimalziffern für die Maskenverarbeitung mehr benötigt werden.

12. Datenverarbeitungsanlage nach Anspruch 10, **dadurch gekennzeichnet,** daß erst nach Abarbeitung beider vor Start der Aufbereitung geladenen Sendefeldzeilen eine weitere Sendefeldzeile nachgeladen wird und die jeweils nachzuladende Sendefeldzeile immer in denselben freien Wechselpuffer übernommen wird.

13. Datenverarbeitungsanlage nach einem der Ansprüche 10 bis 12, **dadurch gekennzeichnet,** daß bei Verfügbarkeit nur einer Sendefeldzeile bis zur Seitengrenze einer angrenzenden, nicht verfügbaren Seite nur diese eine Sendefeldzeile in einen der Wechselpuffer vorausgeladen wird, während bei nicht verfügbarer Sendefeldzeile eine Ladeanforderung erst bei Bedarf eines Sendefeldzeichens während der Verarbeitung der Maskenzeichen ausgelöst wird.

14. Datenverarbeitungsanlage nach einem der Ansprüche 8 bis 13, **dadurch gekennzeichnet,** daß bei Verwendung von Wechselpuffern die Umschaltung auf den jeweils zu ladenden bzw. den die zu verarbeitenden Zeichen bereitstellenden Wechselpuffer jeweils durch einen gesonderten Zähler (Z-PAT, Z-SOU) gesteuert wird, der jeweils bei Laden des ersten Wechselpuffers mit der Byteadresse (EDHBYADD) für das erste gültige Zeichen der geladenen Zeile geladen und mit jedem verarbeiteten Zeichen jeweils um einen Schritt zyklisch weitergeschaltet wird, wobei mit jedem Überschreiten der Zählkapazität ein Steuersignal (PLICTO, SLICTO) wirksam wird, daß die Auswahl des jeweils zu ladenden Wechselpuffers bzw. der jeweils zu verarbeitenden geladenen Zeile steuert.

15. Datenverarbeitungsanlage nach Anspruch 14, **dadurch gekennzeichnet,** daß das Laden der jeweils ersten Zeile von Aufbereitungsmaske und Sendefeld sowie der zugehörigen Byteadressen (EDHBYADD, EDLBYADD) für das jeweils erste und jeweils letzte gültige Zeichen der geladenen Zeilen durch ein gesondertes Betriebssteuersignal (FMODE) gekennzeichnet wird, das bei Verwendung von Wechselpuffern zugleich die Funktion der normalerweise die Auswahl der Wechselpuffer treffenden Steuersignale (PLICTO, SLICTO) übernimmt.

16. Datenverarbeitungsanlage nach Anspruch 15, **dadurch gekennzeichnet,** daß ein weiteres Betriebssteuersignal (EDMOD) bei Verwendung von Wechselpuffern für die Sendefeldzeilen eine Umsteuerung zwischen vorauslesendem Laden bzw. Nachladen des jeweils freien Wechselpuffers oder dem Laden bzw. Nachladen nur bei Bedarf in einen ausgewählten Wechselpuffer ermöglicht.

17. Datenverarbeitungsanlage nach einem der Ansprüche 2 bis 14, **dadurch gekennzeichnet,** daß Nachladeanforderungen (PEMPT, SEMPT) an die Befehlsverarbeitungssteuerung (PLU/EXU) durch das Erreichen des jeweiligen Zeilenendes bzw. des letzten gültigen Maskenzeichens anhand der beim Laden einer jeden Maskenzeile ebenfalls mitgelieferten Byteadresse (EDLBYADD) für das jeweils letzte gültige Maskenzeichen einer Zeile anzeigende Steuersignale (SEND, PEND) ausgelöst werden, wobei eine durch das letzte Maskenbyte der Aufbereitungsmaske ausgelöste Anforderung das Ende der Aufbereitung kennzeichnet.

18. Datenverarbeitungsanlage nach Anspruch 17, **dadurch gekennzeichnet,** daß Ladeanforderungen (SEMPT) für eine Sendefeldzeile erst bei Bedarf (DSSIVAL = 1) eines Sendefeldzeichens ausgelöst werden.

# FIG 1

ED/EDMK

| OPCODE | L | B1 | D1 | B2 | D2 |
|--------|---|----|----|----|----|

# FIG 2

FIG 3

EP 0 508 356 A2

# FIG 4A

```
        ┌─────────────────┐
        │  START μ-ST     │
        └────────┬────────┘
                 │
        ┌────────┴────────┐
        │   READ SOU1     │
        └────────┬────────┘
                 │
        ┌────────┴────────┐
        │   LOAD SOU      │
        │ ─ ─ ─ ─ ─ ─ ─   │
        │    F MODE       │
        └────────┬────────┘
                 │
        ┌────────┴────────┐
     E {│   READ SOU2     │
        └────────┬────────┘
                 │
        ┌────────┴────────┐
        │   LOAD SOU      │
        └────────┬────────┘
                 │
        ┌────────┴────────┐
        │   READ PAT1     │
        └────────┬────────┘
                 │
        ┌────────┴────────┐
        │   LOAD PAT      │
        │ ─ ─ ─ ─ ─ ─ ─   │
        │   F MODE        │
        │   EDMOD=1       │
        └────────┬────────┘
```

L = 1 ?  →  (A)

N

READ PAT 2

LOAD PAT

PENGO
SENGO
FMODE
GO = 1

(C)

L = 1 ?  →  (B)

N

ED-AUFBEREITUNG

SEMPT = 1 ?

N

PEMPT = 1 ?

N

GO=0

READ SOU

LOAD SOU

SENGO
GO=1

GD=0

WRITE RES

READ PAT

LOAD PAT

PENGO
GO=1

FIG4B

# FIG 4C

```
         ( START μ - ST )
                │
                ▼
    ┌──────────────────────┐
E { │     READ PAT 1       │
    └──────────────────────┘
                │
                ▼
    ┌──────────────────────┐
    │  ─ LOAD PAT ─ ─      │
    │     FMODE            │
    │     EDMODE=1         │
    └──────────────────────┘
                │
                ▼
           ╱          ╲        ]
          〈   L = 1 ?   〉────────▶ (A)
           ╲          ╱
                │ N
                ▼
    ┌──────────────────────┐
    │     READ PAT 2       │
    └──────────────────────┘
                │
                ▼
    ┌──────────────────────┐
    │     LOAD PAT         │
    └──────────────────────┘
                │
                ▼
    ┌──────────────────────┐
    │     PENGO            │
    │     FMODE            │
    │     GO=1             │
    └──────────────────────┘
                │
                ▼
               (C)
```

FIG 5

EP 0 508 356 A2

# FIG 6

BUF - LST

# FIG 7A

EP 0 508 356 A2

FIG 7 B

23

FIG 8A

EP 0 508 356 A2

# FIG 8B